# EUROPÄISCHE PATENTANMELDUNG

(11) **EP 2 182 248 A2**
(43) Veröffentlichungstag der Anmeldung: **05.05.2010**
(21) Anmeldenummer: 09466025.5
(22) Anmeldetag: 27.10.2009
(51) Int. Cl.: F16H 7/08

(54) **Hydraulischer Spanner**

(30) Priorität: 30.10.2008 CZ 20080680
(71) Anmelder: Skoda Auto A.S., 293 60 Mladá Boleslav (CZ)
(72) Erfinder: Musal, Petr, 29301 Mladá Boleslav (CZ)

(57) **Zusammenfassung**

Hydraulischer Spanner des Ketten- oder Riemenantriebs des Motors mit der sukzessiven Sperrung von dessen Arbeitskolben gegen eine rückwärtige Bewegung umfasst den Spannerkörper (1) und in diesem die ausgebildete Druckkammer (3), in der sich der Arbeitskolben (4) und die Feder (7) befindet. Am Umfang des Kolbens (4) sind profilumfangsnute (8) zur Arretierung gegen eine rückwärtige Bewegung ausgebildet und im Spannerkörper (1) befindet sich eine Formnut (9). Der Arbeitskolben (4) des Spanners weist zwei Positionen und zwar die Ausgangsmontageposition und die Arbeitsspannposition vor.

Die Darstellung der Erfindung besteht darin, dass im Spannerkörper (1) die gefederte Arretierungssicherung (5) so verankert ist, dass sich die in der Montageposition in der Montagenut (10) des Arbeitskolbens (4) und ebenfalls in der Formnut (9) des Spannerkörpers (1) befindet, und sich in der Arbeitsspannposition in der Profilumfangsnut (8) Arbeitskolbens (1) und ebenfalls in der Formnut (9) des Spannerkörpers (1) befindet, wobei die Breite der Formnut (9) des Spannerkörpers (1) größer ist als der Durchmesser der Arretierungssicherung (5). Die Arretierungssicherung (5) ist als eine Formfeder ausgebildet.

## Beschreibung

### Technisches Gebiet

Die Erfindung betrifft den hydraulischen Kettenspanner oder Riemenspanner mit sukzessiver Kolbensperre gegen eine rückwärtige Bewegung.

### Bisheriger Stand der Technik

Gegenwärtig befinden sich in den Kraftfahrzeugen die mittels Motoren angetrieben werden verschiedene Hilfsaggregate, wie zum Beispiel die Nockenwelle, die Öl- und Wasserpumpe, der Generator, der Klimakompressor usw. Dieser Antrieb erfolgt mittels einer Ketten- oder Riemensteuerung. Für die benötigte Standzeit der Antriebsketten und -riemen und für die korrekte Funktion der mittels dieser Steuerantriebe angetriebener Aggregate ist die Einstellung und die Beibehaltung einer korrekten Spannung dieser Ketten und Riemen sehr bedeutsam. Zu diesem Zweck werden hydraulische Spannvorrichtungen verwendet.

Die bestehenden hydraulischen Spannvorrichtungen ohne Sperre des rückwirkend aufwickelnden Spannkolbens weisen beim Motorstart des kalten Motors, d.h. wenn die Druckkammer ohne Öldruck ist, verschiedene Geräusche auf. Diese Geräusche verursacht der Kolben durch den Aufschlag auf den Kammerboden. Die rückwärtige Bewegung ist dann direkt von der Geschwindigkeit der Entlüftung und Entleerung der Druckkammer abhängig.

Die Spannvorrichtung zur sukzessiven Sperrung gegen eine rückwärtige Bewegung ist teilweise bereits durch DE 10 2006 028 988 A1 bekannt. Bei dieser bekannten Lösung wird eine mittels Federn vorgespannte und mittels Stiften drehbar gelagerte, komplizierte schwenkbare Sperrvorrichtung verwendet.

Der Nachteil dieser Lösung besteht darin, dass dieses Sperrsystem sich aus vielen Konstruktionsbestandteilen zusammen setzt und aus der Sicht der Produktion und Montage unwirtschaftlich ist. Aufgrund dessen entstehen auch vergleichbar hohe Herstellungskosten.

### Darstellung der Erfindung

Die aufgeführten Unzulänglichkeiten beseitigt die Spannvorrichtung mit rückwirkender Arretierung hinsichtlich der Kolbenbewegung laut der Erfindung.

Hydraulischer Spanner des Ketten- oder Riemensteuertriebs des Motors mit sukzessiver Sperrung von dessen Arbeitskolben gegen eine rückwärtige Bewegung, laut der Erfindung, beinhaltet den Spannerkörper, in welchem eine Druckkammer gebildet wird. In der Druckkammer befinden sich ein Arbeitskolben und eine Feder. An den aktiven Teilen des Arbeitskolbens befinden sich an dessen Umfang Profilumfangsnuten zur Arretierung gegen eine rückwärtige Bewegung dieses Kolben. Im Spannerkörper befindet sich eine Formnut mit der offenen Seite zum Kolbenumfang orientiert. Der Arbeitskolben des Spanners zeigt zwei Positionen und zwar die Ausgangsmontageposition und die arbeitende Spannposition.

Die Darstellung der vorgeschlagenen Lösung besteht darin, dass im Spannerkörper eine gefederte Arretierungssicherung verankert so, dass diese frei drehbar ist und mittels der Eigenform sukzessive Arretierungsschritte ermöglicht. Diese Arretierungssicherung befindet sich in der Ausgangsmontageposition in der Montagenut des Arbeitskolbens und in der Formnut des Spannerkörpers, und in der spannenden Arbeitsposition befindet sich die Arretierungssicherung in der Profilumfangsnut des Kolbens und in der Formnut des Spannerkörpers, wobei die Breite der Formnut des Spannerkörpers größer ist als der Durchmesser der Arretierungssicherung, die in die Formnut einklinkt. Die Arretierungssicherung wird vorteilhaft als eine Formfeder gebildet.

### Übersicht der Figuren der Zeichnungen

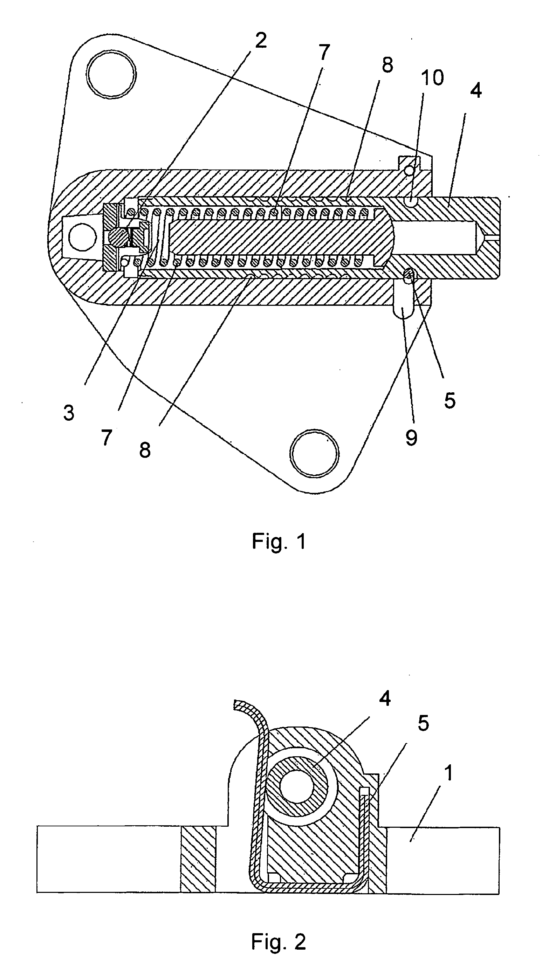

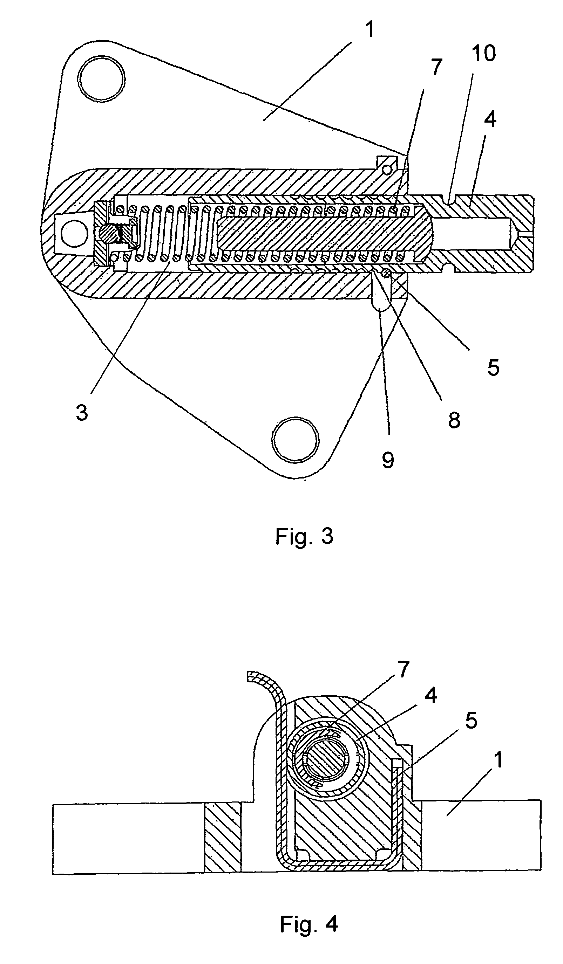

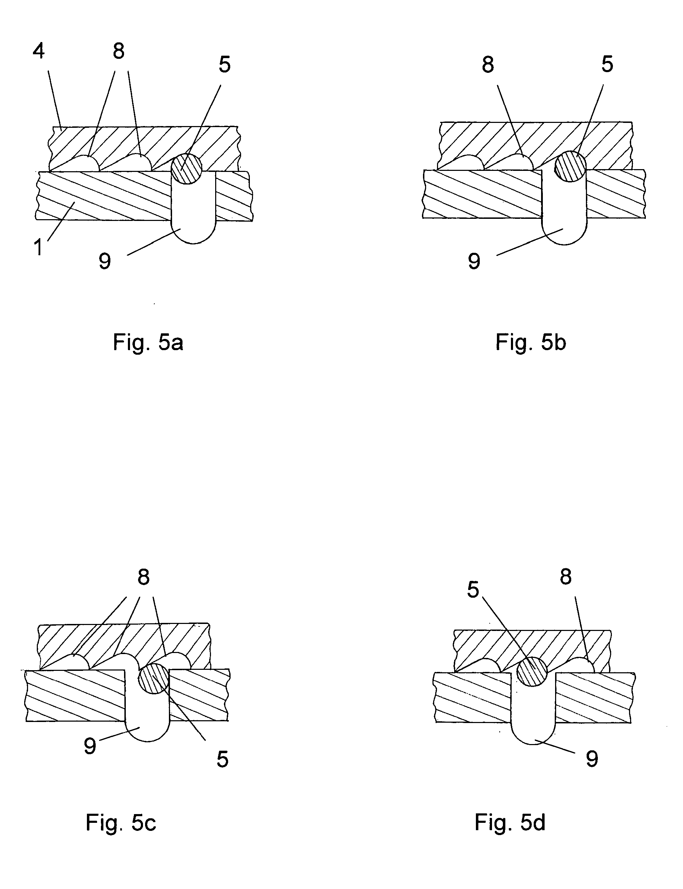

In der Fig. 1 und 2 ist in der Front- und Seitenansicht im Querschnitt der hydraulische Spanner in der Ausgangsmontageposition dargestellt, in der Fig. 3 und 4 ist in der Front- und Seitenansicht im Querschnitt der hydraulische Spanner in der Arbeitsspannposition dargestellt und in der Fig. 5a bis 5d befindet sich die Schnittdarstellung des Bewegungsdetails der Arretierungssicherung in der Formnut des Körpers.

### Ausführungsbeispiel der Erfindung

Hydraulischer Spanner der Kette oder des Riemens so, wie in den Figuren 1 bis 4 aufgeführt, wird durch einen Spannerkörper 1 mit einer Druckölzuleitung über ein Rückschlagventil 2 in die Druckkammer 3, in der sich der Arbeitsstößel 4 und die Feder 7 befindet. In dieser Kammer 3 befindet sich der Arbeitskolben 4 versehen mit den Profilumfangsnuten 8, welche sich an der äußeren Ummantelung des Arbeitskolbens 4 in der Länge des aktiven Arbeitshubs befinden. Am gegenüber liegenden freien Ende des Arbeitskolbens 4 befindet sich die Spannschiene der Steuerkette oder des Steuerriemens (nicht dargestellt).

Weiter, wie in der Fig. 1 ersichtlich, ist der Kolben 4 mit einer Montagenut 10 versehen und dient als Einstich zur Kolbensperrung 4 in der Montageposition.

Im Spannerkörper 1, nach der Fig. 2 uns 4, befindet sich die gefederte Arretierungssicherung 5. Diese Sicherung 5 ist im Spannerkörper 1 so eingefasst, damit diese frei drehbar ist und mittels der Form die sukzessiven Arretierungsschritte ermöglicht. Die Arretierungssicherung 5 wird vorteilhaft als eine Formfeder gebildet.

Im Spannerkörper 1 ist eine Formnut 9 ausgebildet, mittels deren Breite das notwendige Intervall zur Bewegung der Arretierungssicherung 5 abgegrenzt wird, welche so platziert ist, wie in den Figuren 1,3, und 5 dargestellt.

Die Arretierungssicherung 5 hat eine Doppelfunktion.

In der Montageausgangsposition, nach der Fig. 1 und 2, klinkt die Arretierungssicherung 5 in die Montagenut 10 ein und dient als Blockiervorrichtung der Bewegung des Kolbens 4.

Nach der Freigabe des Arbeitskolbens 4 aus der Montageposition verschiebt sich der Arbeitskolben 4 mittels der Feder 7 in die spannenden Grundarbeitsposition, wie in den Figuren 3 und 4 ersichtlich und die Arretierungssicherung 5 klinkt in die Ausgangsprofilumfangsnut 8 ein. Bis zum Zeitpunkt, bevor die Wirkung des Öldrucks in der Druckkammer 3 über das Rückschlagventil 2 einsetzt, stellt die Arretierungsfeder 5 die Stabilität der Position des Stößels 4 sicher und verhindert so unerwünschte Geräuschentwicklungen. Die Arretierungssicherung 5, gesperrt in der Ausgangsprofilumfangsnut 8, verhindert die rückwärtige Bewegung des Arbeitskolbens 4, welche durch die ungleichmäßige Krafteinwirkung der Spannschiene verursacht wird. Im Verlauf des Motorenbetriebs kommt es zur teilweisen Verlängerung der Kette oder des Riemens.

Der Arbeitskolben 4 des Spanners wird sukzessive im Spannerkörper 1 verschoben und die Arretierungssicherung 5 verschiebt sich in die nächste Arretierungsprofilunfangsnut 8 am Arbeitskolben 4 des Spanners, wie in der Fig. 5a bis 5d angezeigt.

Durch die Wärmeausdehnung der Motorenbauteile kommt es zur Spannung und Freimachung der Kette (des Riemens). Damit es zu keiner erhöhten Beanspruchung der Spann- und Führungsschiene kommt, ermöglicht die entworfene Lösung die freie Bewegung der Arretierungssicherung 5 in der Formnut 9 (Fig. 5a und 5b). Diese Vorrichtung verhindert eine eventuelle Kraftbeanspruchung des Kettenantriebs (Riemenantriebs) und seiner Mechanismen bis zum Zeitpunkt des Druck- und Wärmeausgleichs der Maschine. Die einzelnen Schritte der Sperrung der rückwirkenden Bewegung des Kolbens 4 sind durch die Arretierungssicherung 5 gesichert, welche als Formfeder ausgebildet ist.

### Gewerbliche Anwendbarkeit

Hydraulischer Spanner zur Ketten- oder Riemenspannung mit rückwirkender Arretierung und Dilatationsformnut kann überall dort eingesetzt werden, wo eine Spannung mit minimaler rückwärtiger Bewegung gefordert wird, einschließlich der Vorrichtungen zur Kraftelemination seitens der Teiledilatation.

### Verwendete Kennzeichnungen

- 1: Spannerkörper
- 2: Rückschlagventil
- 3: Druckkammer des Spanners
- 4: Arbeitskolben des Spanners
- 5: Arretierungssicherung
- 7: Feder des Spanners
- 8: Profilumfangsnut des Arbeitskolbens
- 9: Formnut des Spannerkörpers
- 10: Montagenut der Montageposition

## Patentansprüche

1. Hydraulischer Spanner des Ketten- oder Riemenantriebs des Motors gebildet durch den Spannerkörper (1) mit der Zuleitung des Öldrucks mittels des Rückschlagventils (2) von der Druckkammer (3), wobei im Spannerkörper (1) eine Formnut (9) ausgebildet ist; und in der Druckkammer (3) ein platzierter Arbeitskolben (4) mit Feder (7) sich befindet, wobei der aktive Teil des Arbeitshubs des Arbeitskolbens (4) die notwendige Anzahl der Profilumfangsnute (8) aufweist, die auf dem Umfang des Arbeitskolbens (4) ausgebildet sind;
**dadurch gekennzeichnet, dass** im Spannerkörper (1) die gefederte Arretierungssicherung (5) verankert ist, die in der Montageposition in der Montagenut (10) des Arbeitskolbens (4) sich und ebenfalls in der Formnut (9) des Spannerkörpers (1) befindet, und in der Arbeitsspannposition sich in der Profilumfangsnut (8) des Arbeitskolbens (4) und ebenfalls in der Formnut (9) des Spannerkörpers (1) befindet.

2. Hydraulischer Spanner nach Anspruch 1, **dadurch gekennzeichnet, dass** die Breite der Formnut (9) des Spannerkörpers (1) größer ist als der Durchmesser der Arretierungssicherung (5), die sich in der Formnut (9) befindet.

3. Hydraulischer Spanner nach einem oder mehreren der vorstehenden Ansprüche, **dadurch gekennzeichnet, dass** die Arretierungssicherung (5) als Formfeder ausgebildet ist.
